**Europäisches Patentamt**

**European Patent Office**

**Office européen des brevets**

(19)

(11) Numéro de publication : **0 352 690 B1**

(12) **FASCICULE DE BREVET EUROPEEN**

(45) Date de publication du fascicule du brevet :
09.12.92 Bulletin 92/50

(51) Int. Cl.$^5$ : **G01N 21/07**

(21) Numéro de dépôt : **89113560.0**

(22) Date de dépôt : **24.07.89**

(54) **Laboratoire miniature pour la réalisation d'analyses biologiques par réaction chimique à partir d'un échantillon de sang.**

(30) Priorité : **28.07.88 FR 8810210**

(43) Date de publication de la demande :
**31.01.90 Bulletin 90/05**

(45) Mention de la délivrance du brevet :
**09.12.92 Bulletin 92/50**

(84) Etats contractants désignés :
**AT BE CH DE ES FR GB GR IT LI LU NL SE**

(56) Documents cités :
**FR-A- 2 578 054**
**FR-A- 2 592 170**

(73) Titulaire : **Guigan, Jean**
**5, rue des Ursulines**
**F-75005 Paris (FR)**

(72) Inventeur : **Guigan, Jean**
**5, rue des Ursulines**
**F-75005 Paris (FR)**

(74) Mandataire : **Weinmiller, Jürgen et al**
**Lennéstrasse 9 Postfach 24**
**W-8133 Feldafing (DE)**

EP 0 352 690 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Description

La présente invention concerne un laboratoire miniature pour la réalisation d'analyses biologiques par réaction chimique à partir d'un échantillon de sang.

Dans son brevet français FR-A 85 18954 du 20 décembre 1985 le demandeur a décrit un procédé permettant de délivrer une quantité prédéterminée de sérum à partir d'un échantillon de sang en vue d'analyse. Ce procédé met en oeuvre des cartouches sensiblement rectangulaires qui subissent un certain nombre de rotations sur elles-mêmes et un certain nombre de centrifugations permettant de traiter quelques microlitres de sang et de séparer un ou plusieurs volumes calibrés de sérum. Ce sérum est destiné à être analysé dans l'un des dispositifs décrits notamment dans les brevets français FR-A- 8416448 du 26 octobre 1984, FR-A 8419719 du 21 décembre 1984, FR-A 8504476 du 26 mars 1985, FR-A 8504477 du 26 mars 1985.

Dans tous les cas précités, le procédé implique un transfert de sérum dans le dispositif de traitement.

La présente invention a pour but d'éviter cet inconvénient et de réaliser un laboratoire miniature portable qui permette à un médecin d'effectuer une analyse à partir d'un échantillon de sang, dans des conditions optimales de simplicité et de rapidité.

La présente invention a pour objet un laboratoire miniature pour la réalisation d'analyses biologiques par réaction chimique à partir d'un échantillon de sang, caractérisé par le fait qu'il comporte, sur un bloc contenant des organes mécaniques et électroniques, deux plateaux coaxiaux :

- un plateau supérieur dit plateau de préparation, muni de logements radiaux pour supporter des cartouches de préparation destinées à délivrer au moins une dose calibrée de sérum à partir d'un échantillon de sang, lesdits logements étant capables d'être mis en rotation autour de leur centre,

- un plateau inférieur, dit plateau d'analyse, muni suivant une couronne de secteurs alvéolaires destinés à supporter des cartouches d'analyses, chacune d'elle étant fermée par un couvercle présentant un opercule frangible et présentant intérieurement un compartiment récepteur de liquide séparé par une paroi fragilisée d'un compartiment périphérique de réaction bordé d'une pluralité de tubes de réaction verticaux contenant des réactifs solides,

ledit plateau inférieur présentant un diamètre légèrement supérieur à celui du plateau supérieur de manière à laisser visibles lesdits tubes de réactions périphériques,

laboratoire caractérisé en outre par le fait qu'il comporte dans ledit bloc :

- des moyens pour entraîner séparément les deux plateaux distants l'une de l'autre en rotation autour de leur axe commun, soit en rotation lente, soit en centrifugation,

- des moyens pour faire passer le plateau supérieur en position basse contre le plateau inférieur, le plateau supérieur étant muni d'organes de perçage au droit desdits opercules frangibles de manière à assurer une communication entre les cartouches de préparation et les compartiments récepteurs de liquide des cartouches d'analyse,

- des moyens pour entraîner les deux plateaux solidarisés l'un à l'autre en rotation autour de leur axe commun,

- des moyens pour rompre ladite paroi fragilisée,

- un module de lecture des analyses par voie optique situé au droit de la trajectoire desdits tubes d'analyse,

- un mini ordinateur programmé.

Selon un mode de réalisation préférentiel, ledit plateau supérieur est muni de trois cartouches de préparation susceptibles de délivrer chacune deux doses calibrées de sérum, et ledit plateau inférieur est muni de six cartouches d'analyses, les trois premières étant destinées à l'analyse de la première dose et les trois secondes étant destinées à l'analyse de la seconde dose.

Chaque cartouche d'analyse comporte par exemple une dizaine de tubes de réaction ; elle est stockée de manière étanche avec un diluant incorporé dans son compartiment récepteur de liquide.

De préférence ladite cartouche de préparation comporte un boîtier fermé par un couvercle, tous deux en matière plastique transparente, ledit boîtier comportant une première et une deuxième faces latérales extrêmes, une première et une deuxième faces longitudinales, et étant compartimenté de manière à présenter :

. le long de ladite première face longitudinale en partant de ladite première face extrême, une cuve réceptrice d'échantillon de sang, suivie d'un canal de sortie dans lequel aboutissent une cellule de stockage de sérum et une cellule de stockage de globules rouges,

. le long de ladite deuxième face longitudinale en partant de ladite première face extrême, une cellule de mesure reliée par un tube capillaire d'une part à une cellule centrale d'évacuation de sérum ayant un orifice de sortie dans le fond dudit boîtier, et d'autre part à un canal de trop plein débouchant dans ladite cellule de stockage de sérum puis dans une cuve de trop plein, l'extrémité de la cellule de mesure opposée audit tube capillaire étant reliée par un conduit capillaire à des cellules de trop plein débouchant également dans ledit canal de trop plein. Elle peut présenter en outre contre ladite deuxième face longitudinale et à la sortie desdites cellules de trop plein opposées à la sortie communiquant avec ladite cellule de mesure, un canal longitudinal aboutissant dans une cuve de stockage de sérum située au niveau de ladite seconde face extrême.

D'autres caractéristiques et avantages de la présente invention apparaîtront au cours de la description suivante de modes de réalisation donnés à titre illustratif mais nullement limitatif. Dans le dessin annexé :

- La figure 1 est une vue très schématique en perspective d'un laboratoire miniature selon l'invention.

- La figure 2 est une vue en perspective éclatée d'une cartouche de préparation appartenant au laboratoire de la figure 1.

- Les figures 3A et 3B montrent respectivement schématiquement en vue de dessus le plateau de préparation avec ses cartouches en position A et en position B.

- La figure 4 est une vue schématique de dessus du plateau d'analyse du laboratoire de la figure 1.

- La figure 5 est une vue schématique en perspective éclatée d'une cartouche d'analyse disposée sur le plateau d'analyse de la figure 4.

- La figure 6 est une vue en coupe à l'échelle agrandie montrant la coopération d'une cartouche de préparation et d'une cartouche d'analyse au moment du rapprochement des deux plateaux qui les supportent.

- La figure 7 est une vue schématique partiellement en coupe des moyens mécaniques d'entraînement des plateaux.

- La figure 8 est une vue en coupe selon la ligne VIII selon la figure 7.

- La Figure 9 est une vue en coupe selon la ligne IX-IX de la figure 7.

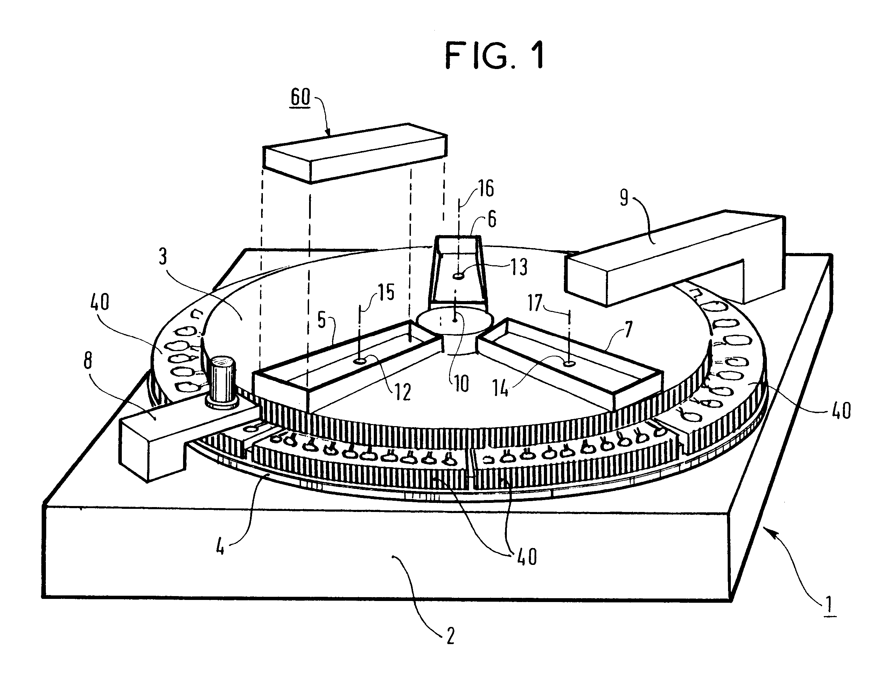

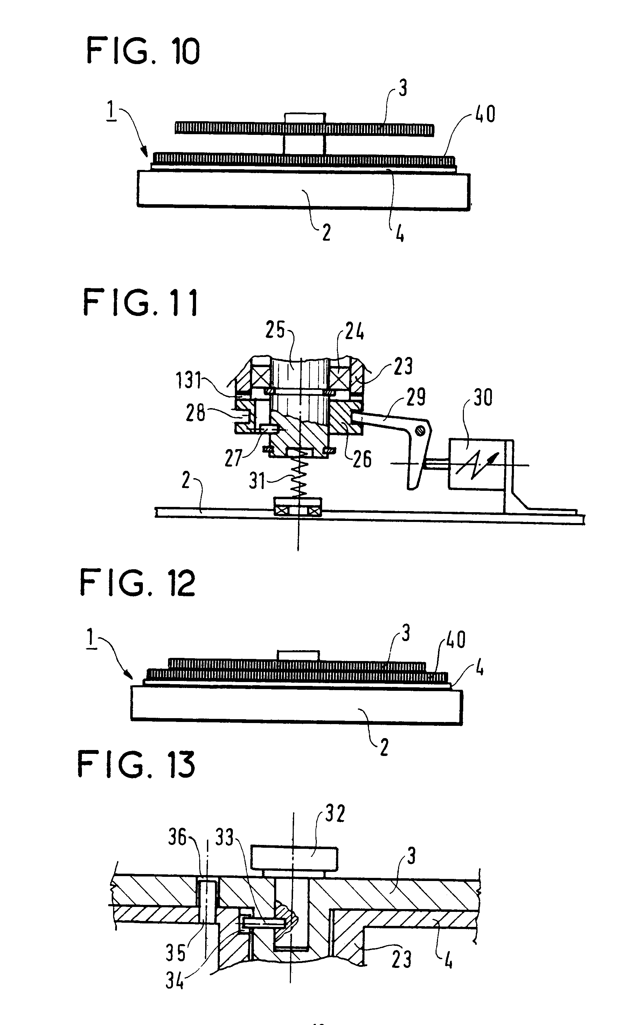

- Le figure 10 est une vue schématique en élévation du laboratoire de la figure 1, le plateau supérieur étant levé.

- La figure 11 montre schématiquement et partiellement le dispositif d'entraînement du plateau supérieur de la figure 10.

- La figure 12 est une vue schématique en élévation du laboratoire de la figure 1 avec son plateau supérieur en position basse.

- La figure 13 montre schématiquement et partiellement le dispositif d'entraînement du plateau supérieur de la figure 12.

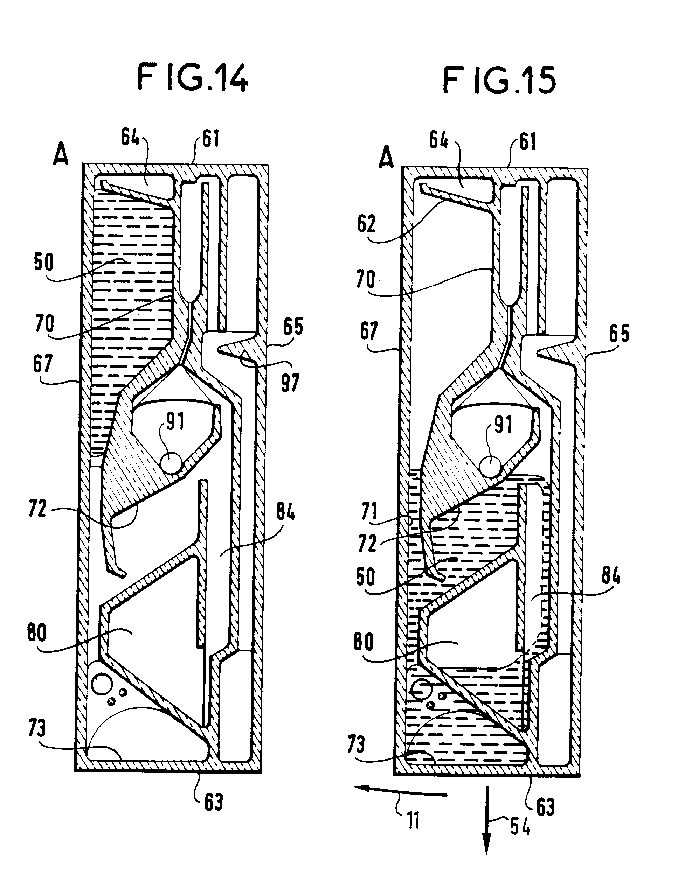

- Les figures 14 à 21 montrent les différentes phases de mise en oeuvre d'une cartouche de préparation en vue de la délivrance d'une première dose de sérum.

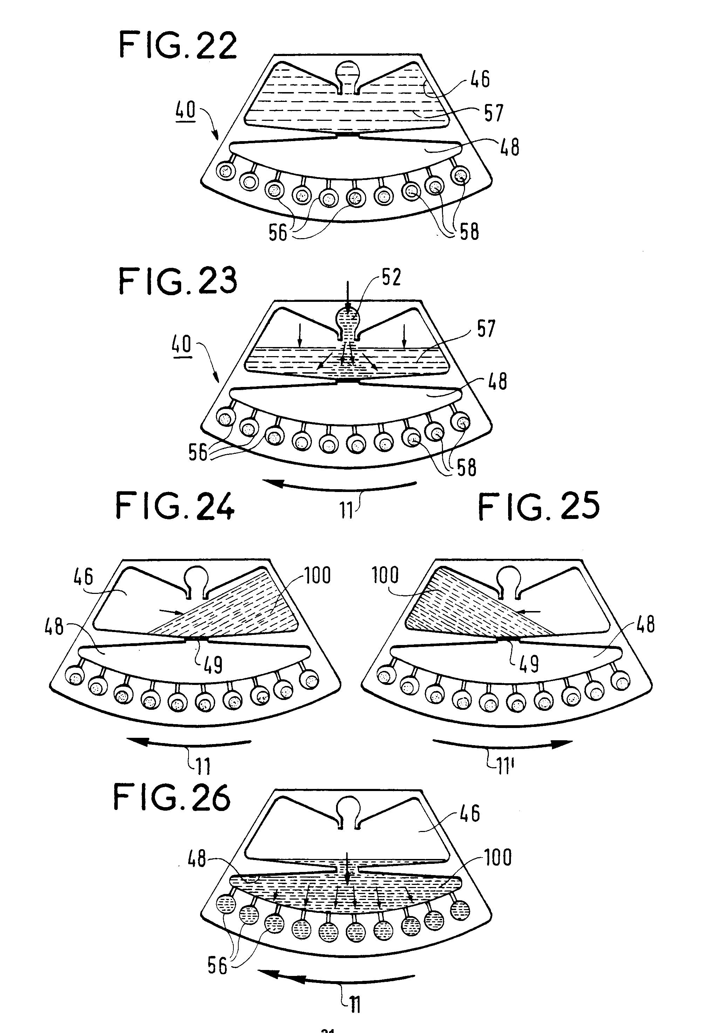

- Les figures 22 à 26 montrent les différentes phases de mise en oeuvre d'une cartouche d'analyse.

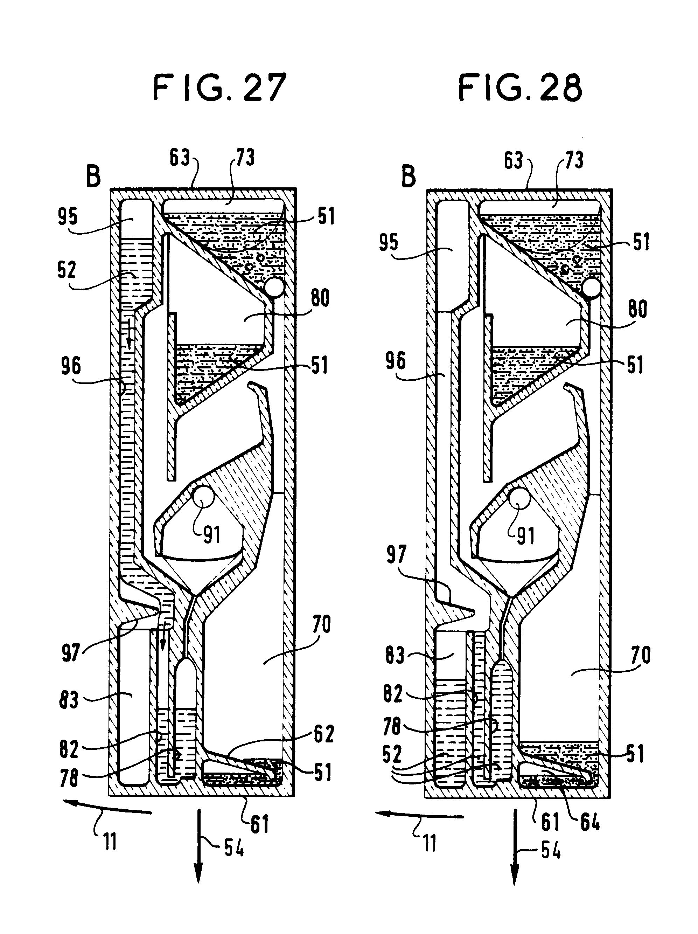

- Les figures 27 à 30 montrent les différentes phases de mise en oeuvre d'une cartouche de préparation en vue de la délivrance d'une seconde dose de sérum.

On a représenté dans la figure 1 très schématiquement un laboratoire miniature 1 selon l'invention pratiquement en grandeur nature. Il comporte, sur un bloc parallélépipédique 2 contenant les éléments mécaniques d'entraînement et l'électronique, deux plateaux circulaires 3 et 4 disposés l'un au dessus de l'autre et pouvant tourner autour de leur axe commun 10. Le plateau supérieur 3 ou plateau de préparation comporte trois logements radiaux 5, 6, 7 en forme de boîte parallélépipédique sans couvercle, susceptibles de tourner autour d'un axe central 15, 16, 17 ; les trois logements peuvent donc se trouver dans la position illustrée dans la figure 1 et dans la position qui s'en déduit par une rotation de 180° respectivement autour des axes 15, 16, 17.

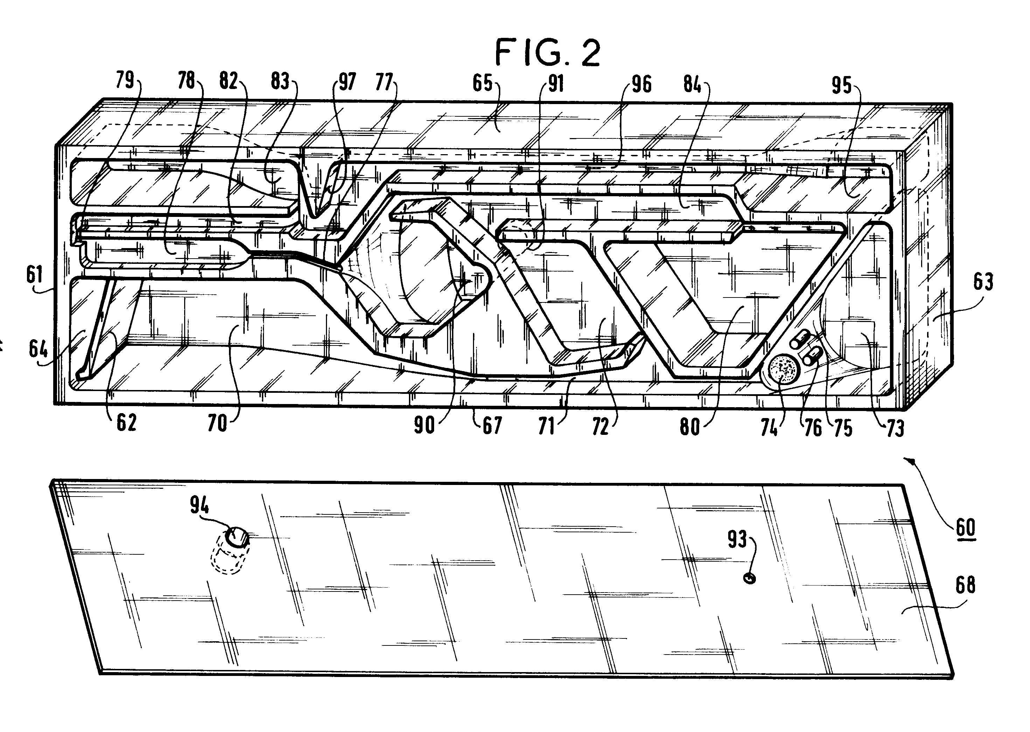

Chaque logement est destiné à contenir une cartouche de préparation 60 conforme au brevet français précité FR-A 8518954, visible dans la figure 2 et dont le fonctionnement sera rappelé. Comme on le verra plus en détail, le plateau de préparation 3 peut être en position basse comme indiqué dans la figure 1, contre le plateau inférieur 4 (cf figure 12), ou être en position haute comme indiqué dans la figure 10 où il est désolidarisé du plateau 4.

En position haute, le plateau 3 peut tourner autour de son axe 10 indépendamment du plateau 4, tandis qu'en position basse, les deux plateaux sont solidaires et tournent ensemble autour de l'axe 10.

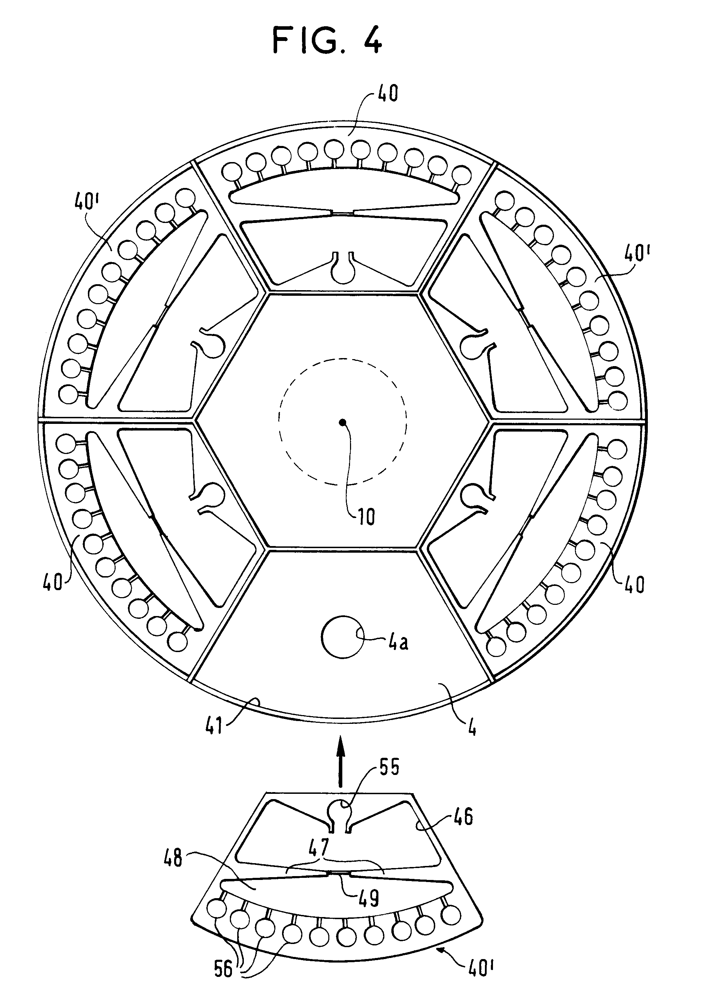

Le plateau 4 ou plateau d'analyse, visible plus en détail dans la figure 4 comporte six cartouches d'analyse 40 destinées à recevoir le sérum issu des cartouches de préparation 60 en vue d'analyses chimiques. Ces cartouches 40 seront décrites en détail plus loin, ainsi que leur mode de mise en communication avec les cartouches de préparation 60.

Le laboratoire miniature 1 comporte en outre (voir figure 1) un module de lecture 8 des analyses situé au droit de la trajectoire de la périphérie du plateau d'analyse 4 et un module 9 susceptible d'entraîner en rotation autour de leurs axes les logements 5, 6, 7.

La figure 2 montre en perspective éclatée une cartouche 60 de préparation permettant de délivrer successivement deux doses calibrées de sérum. Elle est totalement en matière plastique transparente. Elle comporte un boîtier muni d'un couvercle 68 présentant un orifice 94 pour l'introduction de l'échantillon de sang et un évent 93. On a référencé les faces latérales extrêmes 61 et 63 et les faces longitudinales 65 et 67.

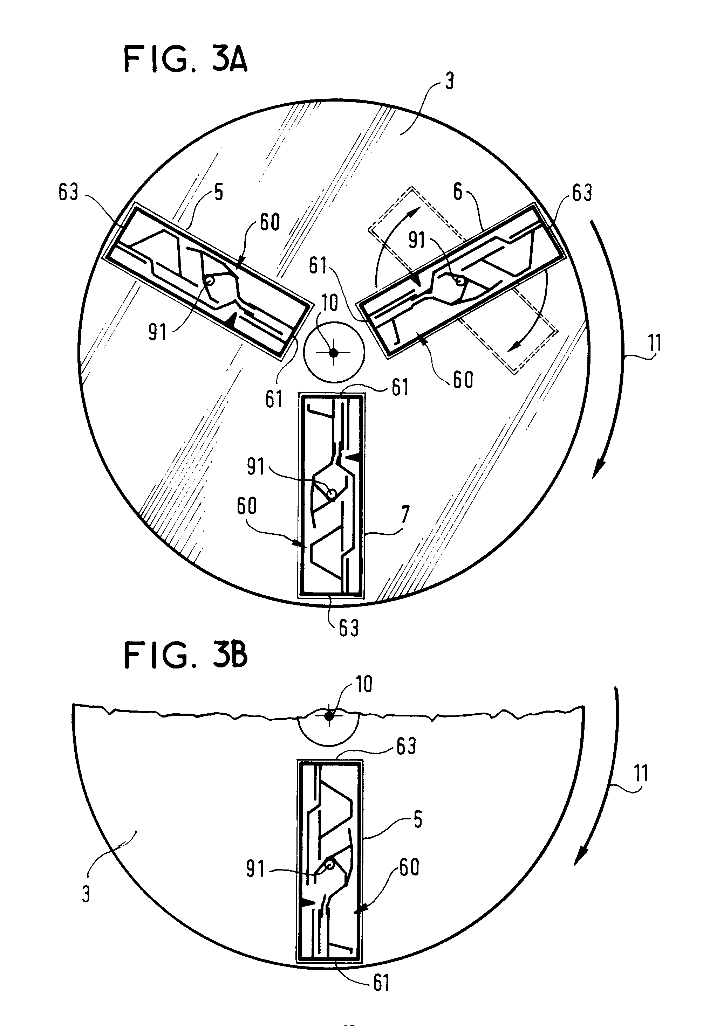

Comme on le voit dans la figure 3A, chaque cartouche de préparation 60 est en position radiale A lorsque sa face latérale extrême 61 est proche de l'axe 10 ; dans la figure 3B, chaque cartouche de préparation 60 est en position radiale B, sa face latérale extrême 61 étant sur la périphérie du plateau 3. La flèche 11 indique le sens de rotation autour de l'axe 10.

En revenant à la figure 2, on voit que le boîtier contient le long de sa face longitudinale 67, une cuve réceptrice de sang 70, un canal de sortie 71 dans lequel débouchent une cellule de stockage de sérum 72, puis une cellule de stockage de globules rouges 73.

La cuve 70 présente une paroi transversale supplémentaire 62 cloisonnant partiellement cette cuve et définissant un compartiment extrême 64.

Une petite bille en matière plastique lestée 74, associée à deux pions de calage 75 et 76, est prévue au voisinage de l'orifice du canal 71 dans la cellule 73.

La cellule de stockage de sérum 72 est reliée d'une part par un tube capillaire 77 à une cellule de mesure 78 ayant un volume calibré, et d'autre part par un canal de trop plein 84 à une cuve de trop plein 80.

Vis-à-vis de la cellule de stockage de sérum 72, la cellule de mesure 78 est située du même côté que la cuve réceptrice 70, et la cuve de trop plein 80 est située du même côté que la cellule de stockage de globules 73.

La cellule de mesure 78 est reliée d'une part par un conduit capillaire 79 à des cellules de trop plein de sérum 82 et 83, et d'autre part par le tube capillaire 77 à une cellule centrale d'évacuation de sérum 90, débouchant vers l'extérieur par un orifice de sortie 91 situé dans le fond de la cartouche de préparation 60.

Chaque orifice 91 est situé au droit d'une ouverture 12, 13, 14 ménagée au milieu du fond du logement 5, 6, 7 qui la reçoit (cf figure 1).

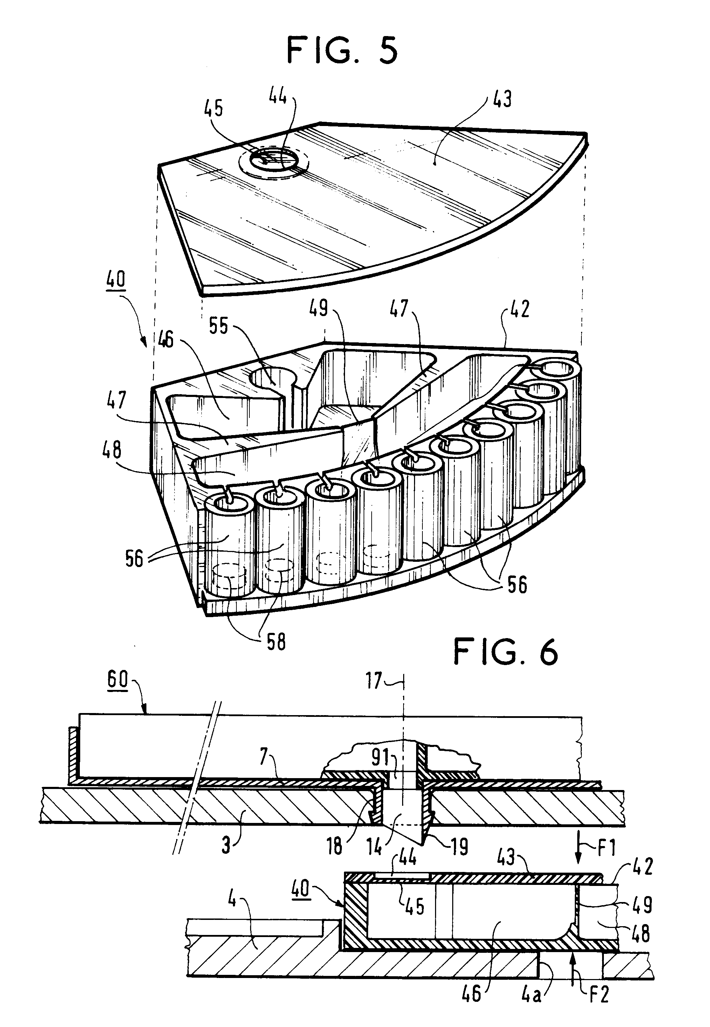

On voit également dans la figure 6 à l'échelle agrandie les dispositions respectives du plateau 3, du logement 7 avec son ouverture 14 et de la cartouche de préparation 60 avec son orifice 91. Le plateau 3 présente à ce niveau une ouverture 18 munie à sa partie inférieure d'un organe de perçage 19 dont on verra l'utilité plus loin.

Le long de la face longitudinale 65 de la cartouche 60 (voir figure 2), sont disposés à partir de la face 61, une cellule de trop plein 83, un conduit 96, et une cuve de stockage de sérum 95 dont on verra le rôle plus loin. Une chicane 97 est prévue dans le conduit 96 au droit de l'entrée de la cellule de trop plein 83.

Comme on le voit dans la figure 4, le plateau inférieur ou plateau d'analyse 4 comporte 6 alvéoles 41 en forme de secteur de couronne destinés à recevoir chacun une cartouche d'analyse 40 de même forme. Ces cartouches, au nombre de six, sont regroupées en deux séries alternées : trois sont référencées 40 et les trois autres sont référencées 40′. Les trois premières fonctionneront à partir d'une première dose de sérum délivrée par les trois cartouches de préparation 60 installées sur le plateau 3, tandis que les trois secondes fonctionneront à partir d'une seconde dose de sérum délivrée ensuite par les mêmes cartouches de préparation 60, le plateau supérieur 3 étant alors décalé de 60° par rapport à sa première position vis-à-vis du plateau inférieur.

Comme on le voit dans la figure 5, chaque cartouche d'analyse 40 en matière plastique transparente comprend un boîtier 42 fermé par un couvercle 43 muni d'une ouverture 44 fermée par un opercule frangible 45. Cet opercule frangible est destiné à être situé au droit de l'axe 17 et des ouvertures coaxiales 14, 91 et 18 du plateau supérieur (voir figure 6) et notamment au droit de l'organe de perçage 19.

Le boîtier 42 comporte un compartiment 46 proche de l'axe 10 appelé compartiment récepteur de liquide 46, et contenant initialement un diluant ; la zone 55 apparaissant dans le compartiment 46 est située au droit de l'opercule frangible 45. Le compartiment 46 est séparé par une paroi 47 d'un compartiment périphérique 48 de distribution, bordé par dix tubes de réactions verticaux 56. Ces tubes de réaction 56 contiennent de préférence des réactifs secs 58. La paroi 47 présente une zone médiane fragilisée 49 permettant d'isoler les deux compartiments 46 et 48 pendant le stockage.

Lorsque les plateaux 3 et 4 sont mis en place l'un contre l'autre (direction F1 de la figure 6), un marteau non illustré et actionné par un électro-aimant est susceptible de taper à travers une ouverture 4a ménagée dans le plateau 4 (force F2) sous la cartouche 60 pour rompre la zone fragilisée 49.

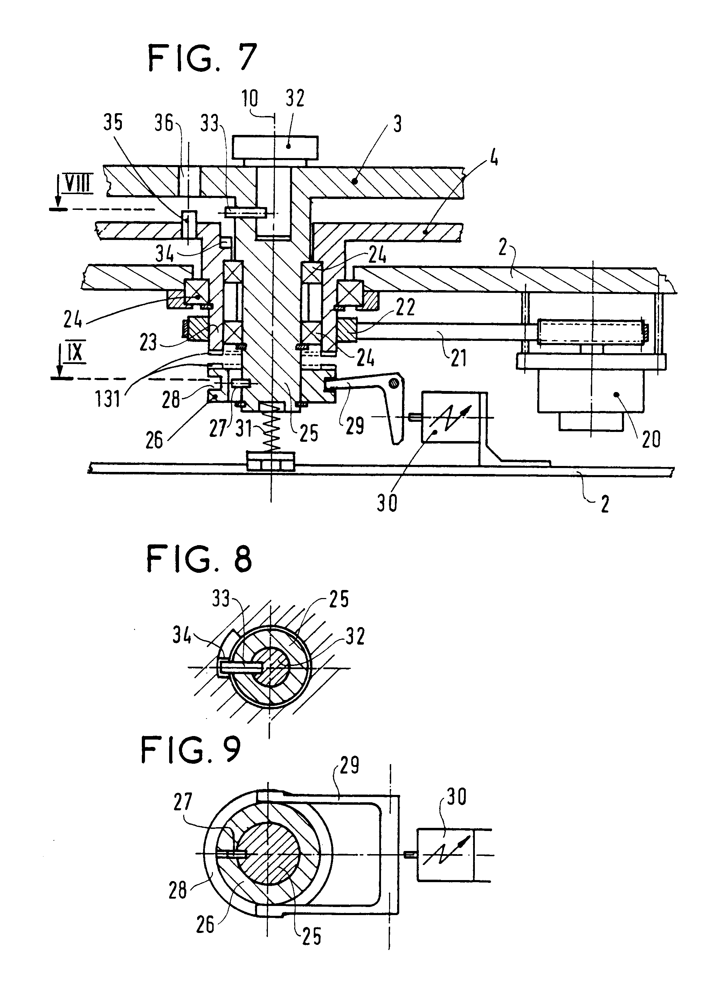

Les figures 7 à 13 montrent schématiquement les éléments mécaniques logés dans le bloc 2 support des plateaux 3 et 4 et permettant leur entraînement.

On retrouve dans la figure 7 le plateau supérieur 3 et le plateau inférieur 4 avec leur axe de rotation commun 10, en position désolidarisée. Un moteur 20 à courant continu, associé à un codeur angulaire susceptible de permettre la gestion de l'ensemble des rotations des plateaux, est fixé dans le bloc 2. Il est associé à un système de transmission comportant une courroie crantée 21 et une roue 22 solidaire d'un moyeu 23 lié au plateau 4. On a référencé 24 divers paliers. Dans la position de la figure 7, les plateaux 3 et 4 sont distants l'un de l'autre ; autrement dit, le plateau 3 est en position haute, et le moteur 20 ne peut entraîner que le plateau 4.

L'arbre 25 lié au plateau 3 est fixé à sa partie inférieure par un ressort de rappel 31 au bloc 2.
Un embrayage 26, visible également dans la figure 9 est lié en rotation à l'arbre 25 par un doigt 27. Il présente une rainure circulaire 28 coopérant avec un levier 29 à deux positions commandées par un électro-aimant 30.

Lorsque le levier 29 passe de la position illustrée dans la figure 7 à la position haute, deux faces crantées référencées 131, appartenant respectivement au moyeu 23 et à l'embrayage 26, coopèrent entre elles, et les deux plateaux 3 et 4, toujours distants l'un de l'autre, sont entraînés simultanément par le moteur 20. Cette situation apparaît plus clairement dans les figures associées 10 et 11.

Pour mettre le plateau 3 en position basse, comme cela est illustré dans la figure 12, on pousse vers le bas sur un verrou central 32 lié à l'arbre 25 par l'intermédiaire d'un doigt 33 visible dans les figures 7 et 8. Ce doigt vient se bloquer dans un orifice 34 prévu dans le moyeu 23, tandis qu'un ergot 35 vertical entre dans un trou 36 prévu à cet effet dans le plateau 3. On aboutit à la position illustrée dans la figure 13. Les deux plateaux 3 et 4 sont mis en place très précisément l'un par rapport à l'autre et sont susceptibles de tourner ensemble.

Au moment où l'on appuie sur le verrou 32, (voir figure 6), les trois organes de perçage 19 appartenant au plateau 3 viennent percer les opercules frangibles 45 des cartouches 40 qui sont ainsi mises en communication avec les cartouches de préparation 60.

On va décrire ci-dessous les phases d'utilisation du laboratoire miniature selon l'invention.

Trois cartouches d'analyse 40 sont mises en place dans les alvéoles 41 du plateau 4. Trois cartouches de préparation sont mises en place en position A, comme indiqué dans la figure 3A, dans le plateau 3 en position haute.

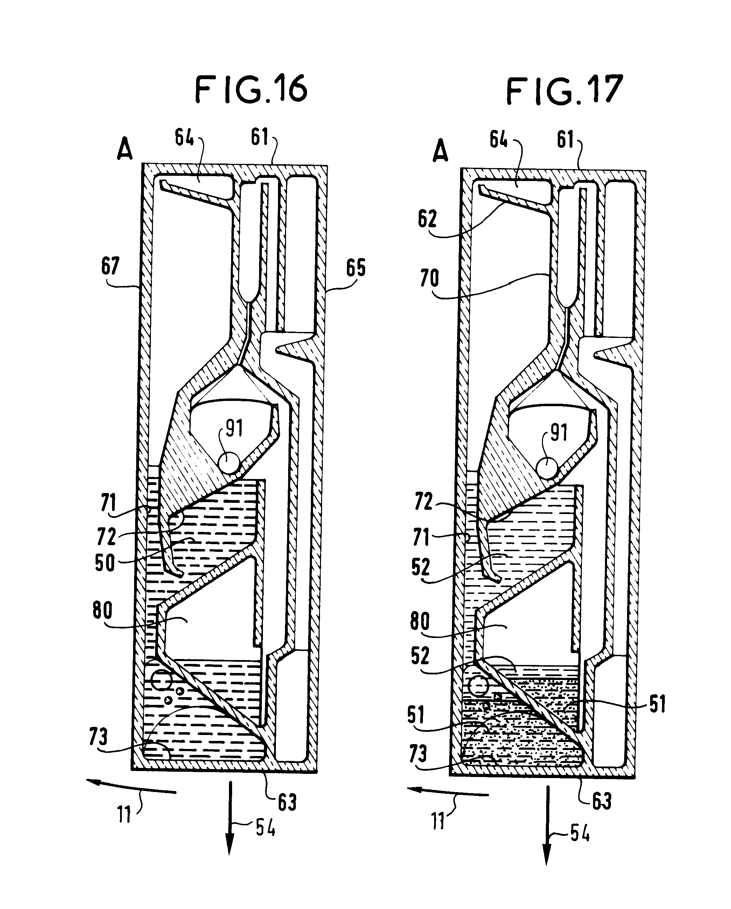

On s'intéresse d'abord à la cartouche 60 visible dans la figure 14 et dans laquelle le médecin a introduit à l'aide d'une pipette un échantillon de sang 50. Dans la figure 15, la rotation 11 du plateau 3 a commencé et la force centrifuge 54 a pour effet de vider la cuve 70 par le canal 71 dans la cellule de stockage de sérum 72, la cellule 73, le canal de trop plein 84 et la cuve de trop plein 80. La figure 16 montre l'état de la cartouche 60 à ce moment. Par la poursuite de la rotation, (figure 17) on aboutit à une décantation et à l'accumulation de globules rouges 51 dans la cellule de stockage 73 et dans la cuve de trop plein 80. Du sérum 52 se trouve dans la cellule 72, dans le canal 71 et dans la cuve de trop plein 80.

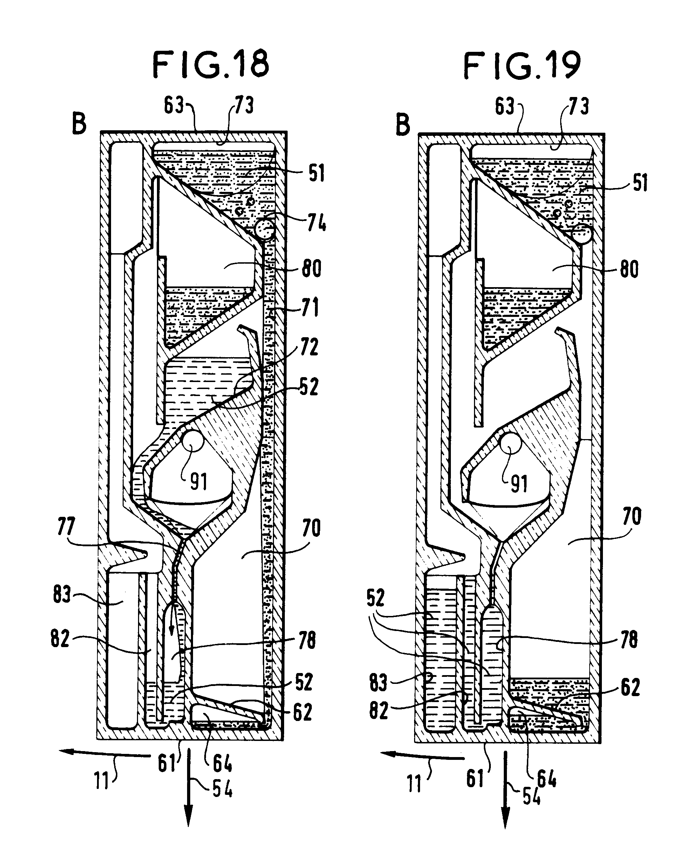

La cartouche 60 est alors mise en position B (figure 3B).
La force centrifuge 54 provoque à ce moment la vidange de la cellule 72 par le tube capillaire 77 (figure 18).
Le sérum remplit tout d'abord la cellule de mesure 78, puis les cellules de trop plein 82 et 83. On aboutit à la situation illustrée dans la figure 19.

Dans le même temps quelques globules rouges présents dans la cellule 73 sont passés, malgré l'obturation du canal 71 par la bille 74, dans la cuve 70 et le compartiment 64.

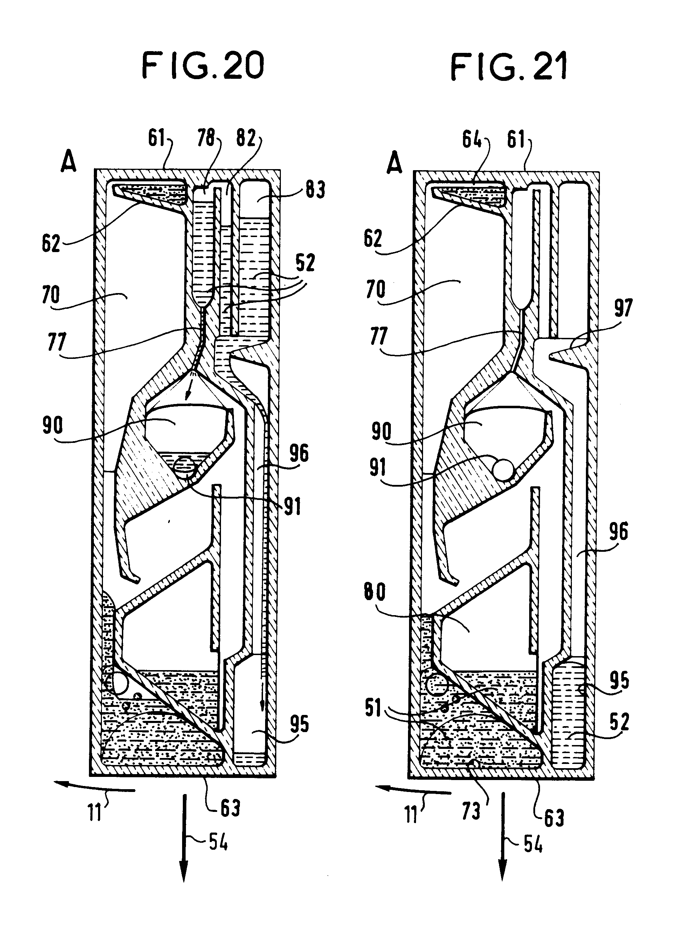

La cartouche 60 est alors remise en position A (figure 3A), et on appuie sur le verrou 32 de manière à mettre le plateau 3 en position basse. Il y a ainsi mise en communication de la cellule d'évacuation 90 de la cellule 60 avec le compartiment récepteur de liquide 46 de la cartouche d'analyse 40 correspondante (voir figure 6). A ce moment on observe, grâce à l'effet de la force centrifuge 54, le passage d'une quantité calibrée de sérum 52 de la cellule calibrée 78 vers la cellule d'évacuation 90, par l'intermédiaire du tube capillaire 77 (figure 20). Cette quantité calibrée est évacuée par l'orifice de sortie 91 (figure 21) dans la cartouche 40. Simultanément l'excès de sérum présent dans les cellules de trop plein aboutit par le conduit 96 dans une cuve de stockage de sérum 95. Les globules rouges, quant à eux, sont stockés dans la cellule 73, la cuve de trop plein 80 et le compartiment 64.

Dans la cartouche 40 (cf figure 22) qui contenait initialement dans son compartiment récepteur de liquide 46 un diluant 57, la situation correspond alors à celle de la figure 23 où apparaît le sérum 52.
A ce moment, de brusques inversions du sens de rotation du plateau 4, dans les sens référencés 11 et 11′ dans les figures 24 et 25, répétées à plusieurs reprises, projettent alternativement le mélange 100 contenu dans le compartiment 46 vers les deux côtés opposés de ce compartiment. On assure ainsi l'homogénéisation du mélange 100.

On va rompre ensuite la zone fragilisée 49 par action d'un marteau dans la direction F2 de la figure 6. Puis, le plateau 3 est avantageusement désolidarisé du plateau 4 qui peut être mis seul en rotation (cf situation de la figure 7).

La zone fragilisée 49 ayant été rompue, la communication entre les compartiments 46 et 48 est établie et une nouvelle centrifugation permet l'accès du mélange 100 aux divers réactifs 58 contenus dans les tubes de réaction 56 (cf figure 26).

Après un temps déterminé par la nature des réactifs, le module de lecture 8 (cf figure 1) définit la nature de la réaction.

Mais les cartouches 60 contiennent encore une réserve de sérum et peuvent encore en délivrer une seconde dose calibrée qui sera analysée dans les cartouches de réaction 40′. Afin de délivrer cette seconde dose, on remet la cartouche 60 en position B (figure 3B). Le sérum 52 présent dans la cuve 95 passe par le conduit 96 et remplit la cellule 82 et la cellule de mesure 78. La chicane 97 évite l'introduction préalable de sérum dans la cellule 83 (figure 27). La figure 8 illustre la fin de cette phase.

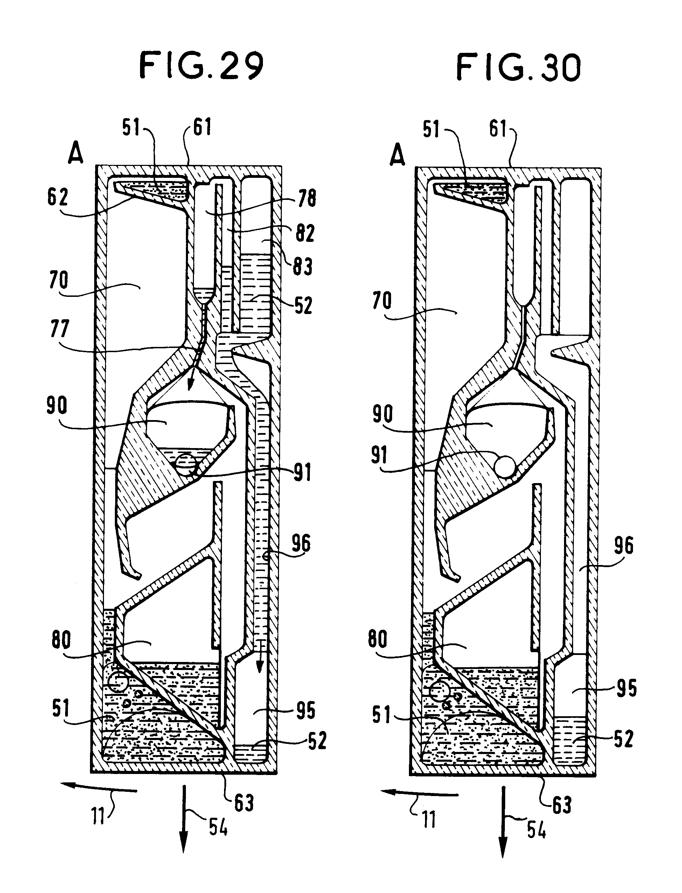

Enfin, on dispose à nouveau la cartouche en position A. On tourne le plateau 4 de manière que les cartouches 40′ viennent au droit des cartouches 60 et on appuie sur le verrou 32. On se retrouve dans la même situation que celle illustrée par les figures 20 et 21. On a une phase d'évacuation illustrée dans les figures 29 et 30. Ensuite on recommence les opérations illustrées dans les figures 22 à 26 avec les cartouches 40′.

Mises à part l'introduction des cartouches et la descente du plateau supérieur, l'ensemble des opérations est géré par un ordinateur qui peut être également de petite dimension. Les résultats issus du module de lecture ressortent sur une petite imprimante.

A titre indicatif, l'encombrement des deux plateaux porteurs de cartouches est de 18 cm x 18 cm sur 5 cm de hauteur. Chaque cartouche 40 comprend dix tubes de réaction.

Ce laboratoire miniature peut analyser simultanément trois échantillons de sang et effectuer sur chacun deux séries de dix tests. Il peut aussi effectuer quarante tests sur un échantillon et vingt sur un autre, ou encore soixante tests sur un seul échantillon.

Le laboratoire miniature qui vient d'être décrit possède notamment les avantages suivants :
- la simplicité de manipulation,
- la souplesse d'utilisation,
- la rapidité d'obtention des résultats,
- la maniabilité,
- l'économie.

En ce qui concerne la simplicité de manipulation : Il suffit à l'opérateur de placer sur l'appareil les cartouches correspondant aux tests demandés, d'y introduire le liquide à analyser, de mettre l'appareil en route, et de détacher le feuillet sur lequel sont imprimés les résultats ; puis, une fois les analyses terminées, il retire les cartouches utilisées.

En ce qui concerne la souplesse d'utilisation : Comme chaque cartouche porte 10 tubes, le constructeur dispose d'un large éventail de choix pour composer les batteries de tests à sa convenance.

En ce qui concerne la rapidité d'obtention des résultats : Le délai moyen d'obtention des résultats des analyses effectuées simultanément (pour 3, 2, ou 1 seul échantillon) est inférieur à dix minutes, dont deux correspondent à la mise en oeuvre des réactions.

Pour ce qui est de la maniabilité : Le coffret, contenant l'appareil ainsi qu'un stock de cartouches, ne pèse pas plus que quelques Kilos.

Bien entendu l'invention n'est pas limitée au mode de réalisation décrit et illustré. On s'est intéressé à un échantillon de sang, mais le laboratoire miniature pourrait recevoir également un échantillon de lait ou toute autre émulsion ou suspension.

La cartouche de préparation peut être agencée de manière à ne délivrer qu'une seule dose de plasma.

## Revendications

1. Laboratoire miniature (1) pour la réalisation d'analyses biologiques par réaction chimique à partir d'un échantillon de sang, caractérisé par le fait qu'il comporte, sur un bloc (2) contenant des organes mécaniques et électroniques, deux plateaux coaxiaux :
   - un plateau supérieur (3) dit plateau de préparation, muni de logements radiaux (5, 6, 7) pour supporter des cartouches de préparation (60) destinées à délivrer au moins une dose calibrée de sérum à partir d'un échantillon de sang, lesdits logements étant capables d'être mis en rotation autour de leur centre,
   - un plateau inférieur (4), dit plateau d'analyse, muni suivant une couronne de secteurs alvéolaires (41) destinés à supporter des cartouches d'analyses (40), chacune d'elle étant fermée par un couvercle (43) présentant un opercule frangible (45) et présentant intérieurement un compartiment récepteur de liquide (46) séparé par une paroi fragilisée (49) d'un compartiment périphérique (48) de distribution bordé d'une pluralité de tubes de réaction verticaux (56) contenant des réactifs solides (58),
   ledit plateau inférieur (4) présentant un diamètre légèrement supérieur à celui du plateau supérieur de manière à laisser visibles lesdits tubes (56) de réaction périphériques,
   laboratoire caractérisé en outre par le fait qu'il comporte dans ledit bloc :
   - des moyens pour entraîner séparément les deux plateaux (4, 3) distants l'un de l'autre en rotation autour de leur axe commun (10), soit en rotation lente, soit en centrifugation,
   - des moyens pour faire passer le plateau supérieur (3) en position basse contre le plateau inférieur (4), le plateau supérieur (3) étant muni d'organes de perçage (19) au droit desdits opercules frangibles (45) de manière à assurer une communication entre les cartouches de préparation (60) et les compartiments récepteurs (46) de liquide des cartouches d'analyse,
   - des moyens pour entraîner les deux plateaux solidarisés l'un à l'autre en rotation autour de leur axe commun,
   - des moyens pour rompre ladite paroi fragilisée (49),
   - un module de lecture (8) des analyses par voie optique situé au droit de la trajectoire desdits tubes d'analyse,
   - un mini ordinateur programmé.

2. Laboratoire miniature selon la revendication 1, caractérisé par le fait que ledit plateau supérieur (3) est muni de trois cartouches de préparation susceptibles de délivrer chacune deux doses calibrées de sérum, et que ledit plateau inférieur est muni de six cartouches d'analyses, les trois premières (40) étant destinées à l'analyse de la première dose et les trois secondes (40') étant destinées à l'analyse de la seconde dose.

3. Laboratoire miniature selon l'une des revendications précédentes, caractérisé par le fait que chaque cartouche d'analyse (40) comprend une dizaine de tubes de réaction (56).

4. Laboratoire miniature selon l'une des revendications précédentes, caractérisé par le fait que chaque cartouche d'analyse (40) est stockée de manière étanche avec, dans son compartiment récepteur de liquide (46), un diluant.

5. Laboratoire miniature selon la revendication 1, caractérisé par le fait que ladite cartouche de préparation comporte un boîtier (60) fermé par un couvercle (68), tous deux en matière plastique transparente, ledit boîtier comportant un première (61) et une deuxième faces latérales (63) extrêmes, une première (67) et une deuxième (65) faces longitudinales, et étant compartimenté de manière à présenter :

. le long de ladite première face longitudinale (67) en partant de ladite première face extrême (61), une cuve réceptrice d'échantillon de sang (70), suivie d'un canal de sortie (71) dans lequel aboutissent une cellule de stockage de sérum (72) et une cellule de stockage de globules rouges (73),

. le long de ladite deuxième face longitudinale (65) en partant de ladite première face extrême (61), une cellule de mesure (78) reliée par un tube capillaire (77) d'une part à une cellule centrale d'évacuation de sérum (90) ayant un orifice de sortie (91) dans le fond dudit boîtier (60), et d'autre part à un canal de trop plein (84) débouchant dans ladite cellule de stockage de sérum (72) puis dans une cuve de trop plein (80), l'extrémité de la cellule de mesure opposée audit tube capillaire (79) étant reliée par un conduit capillaire à des cellules de trop plein (82, 83) débouchant également dans ledit canal de trop plein (84).

6. Laboratoire miniature selon la revendication 5, caractérisé par le fait que ladite cartouche de préparation présente en outre, contre ladite deuxième face longitudinale (65) et à la sortie desdites cellules de trop plein (83) opposées à la sortie communiquant avec ladite cellule de mesure, un canal longitudinal (96) aboutissant dans une cuve de stockage de sérum (95) située au niveau de ladite seconde face extrême (63).

**Patentansprüche**

1. Kleinlabor (1) zur Durchführung biologischer Analysen durch chemische Reaktion ausgehend von einer Blutprobe, dadurch gekennzeichnet, daß es auf einem Block (2), der mechanische und elektronische Organe enthält, zwei koaxiale Plateaus aufweist, nämlich
- ein oberes Plateau (3), auch Vorbereitungsplateau genannt, das radiale Behälter (5, 6, 7) zur Aufnahme von Vorbereitungskartuschen (60) besitzt, die dazu bestimmt sind, mindestens eine geeichte Serumdosis einer Blutprobe abzugeben, wobei die Behälter in der Lage sind, um ihr Zentrum gedreht zu werden,
- ein unteres Plateau (4), auch Analyseplateau genannt, das in einem Ringbereich sektorförmige Vertiefungen (41) zur Aufnahme von Analysekartuschen (40) besitzt, wobei jede dieser Kartuschen mit einem Deckel (43) verschlossen ist, der eine zerbrechliche Membran (45) besitzt und im Inneren ein Fach (46) zum Empfang von Flüssigkeit aufweist, das durch eine zerbrechliche Wand (49) gegen ein peripheres Verteilfach (48) abgetrennt ist, wobei letzteres am Rand eine Vielzahl von senkrechten feste Reagentien (58) enthaltenden Reagenzgläschen (56) trägt und wobei das untere Plateau (4) einen geringfügig größeren Durchmesser als das obere Plateau besitzt, um die peripheren Reagenzgläschen (56) frei sichtbar zu lassen, dadurch gekennzeichnet, daß sich außerdem in dem Block befinden
- Mittel, um die beiden Plateaus (4, 3), solange sie voneinander einen Abstand aufweisen, getrennt um eine gemeinsame Achse (10) in eine langsame oder eine Zentrifugierdrehung zu versetzen,
- Mittel, um das obere Plateau (3) in eine untere Stellung auf dem unteren Plateau (4) zu bringen, wobei das obere Plateau (3) mit Durchstoßorganen (19) in Höhe der zerbrechlichen Membrane (45) versehen ist, so daß eine Verbindung zwischen den Vorbereitungskartuschen (60) und den Fächern (46) zum Empfang von Flüssigkeit in den Analysekartuschen hergestellt werden kann,
- Mittel zum Antrieb der miteinander in Drehrichtung gekoppelten Plateaus um ihre gemeinsame Achse,
- Mittel, die die zerbrechliche Wand (49) zerbrechen können,
- einen Lesemodul (8) für die Analyseergebnisse auf optischem Weg, wobei dieser Modul in Höhe der Umlaufbahn der Reagenzgläschen liegt,
- einen programmierten Kleinrechner.

2. Kleinlabor nach Anspruch 1, dadurch gekennzeichnet, daß das obere Plateau (3) drei Vorbereitungskartuschen enthält, die je zwei geeichte Serumdosen abgeben können, und daß das untere Plateau sechs Analysekartuschen trägt, von denen die drei ersten (40) zur Analyse der ersten Dosis und die drei zweiten Kartuschen (40′) zur Analyse der zweiten Dosis bestimmt sind.

3. Kleinlabor nach einem der vorhergehenden Ansprüche, dadurch gekennzeichnet, daß jede Analysekartusche (40) etwa zehn Reagenzgläschen (56) enthält.

4. Kleinlabor nach einem der vorhergehenden Ansprüche, dadurch gekennzeichnet, daß jede Analysekartusche (40) dicht mit einem Verdünnungsmittel in seinem Fach (46) zum Empfang von Flüssigkeit gelagert wird.

5. Kleinlabor nach Anspruch 1, dadurch gekennzeichnet, daß die Vorbereitungskartusche ein mit einem Deckel (68) verschlossenes Gehäuse (60) enthält, die beide aus durchscheinendem Kunststoffmaterial bestehen, und daß das Gehäuse eine erste (61) und eine zweite seitliche Stirnfläche (63), eine erste (67) und eine zweite Längsseite (65) aufweist und folgendermaßen in Fächer unterteilt ist:
   - entlang der ersten Längsseite (67) und ausgehend von der ersten Stirnfläche (61) befindet sich ein Fach (70) zum Empfang einer Blutprobe, gefolgt von einem Ausgangskanal (71), in den eine Serumspeicherzelle (72) und eine Speicherzelle für rote Blutkörperchen (73) münden,
   - entlang der zweiten Längsseite (65) und ausgehend von der ersten Stirnfläche (61) befindet sich eine Meßzelle (78), die über ein Kapillarrohr (77) einerseits an eine zentrale Serumsentfernungszelle (90), die eine Ausgangsöffnung (91) im Boden des Gehäuses (60) besitzt, und andererseits an einen Überlaufkanal (84) angeschlossen ist, der in die Serumspeicherzelle (72) und dann in ein Überlauffach (80) mündet, wobei das dem Kapillarrohr (79) entfernte Ende der Meßzelle über eine Kapillarleitung an Überlaufzellen (82, 83) angeschlossen ist, die ebenfalls in den Überlaufkanal (84) münden.

6. Kleinlabor nach Anspruch 5, dadurch gekennzeichnet, daß die Vorbereitungskartusche außerdem entlang der zweiten Längsseite (65) und am Ausgang der Überlaufzellen (83) entfernt vom Ausgang, der mit der Meßzelle in Verbindung steht, einen Längskanal (96) aufweist, der in ein Serumlagerfach (95) mündet, das sich in Höhe der zweiten Stirnfläche (63) befindet.

**Claims**

1. A miniature laboratory (1) for performing biological analyses by chemical reaction on a blood sample, the laboratory being characterized in that it comprises, on a block (2) containing electronic and mechanical components, two coaxial turntables, namely:

   a top turntable (3) or "preparation turntable" provided with radial housings (5, 6, 7) for supporting preparation cartridges each for delivering at least one calibrated dose of plasma from a blood sample, said housings being capable of being rotated about their own centers;

   a bottom turntable (4) or "analysis turntable", provided with a ring of recessed sectors (41) suitable for supporting analysis cartridges (40), each being closed by a lid (43) having a breakable skin (45) and each having an internal liquid-receiving compartment (46) separated by a fragile wall (49) from a peripheral distribution compartment (48) adjacent to a plurality of vertical reaction tubes (56) containing solid reagents (58);

   said bottom turntable (4) being slightly larger in diameter than the top turntable so as to leave said peripheral reaction tubes (56) visible;

   the laboratory being further characterized in that it includes, in said block:

   means for separately driving the two turntables (4, 3), when distant from each other, in rotation about their common axis (10), either slowly or for centrifuging;

   means for moving the top turntable (3) into a low position against the bottom turntable (4), the top turntable (3) being provided with piercing members (19) aligned with said breakable skins (45) in such a manner as to establish communication between the preparation cartridges (60) and the liquid-receiving compartments (46) of the analysis cartridges;

   means for driving both turntables, when coupled to each other, about their common axis;

   means for breaking said fragile wall (49);

   an optical reader module (8) situated level with the path of said analysis tubes; and

   a programmed microcomputer.

2. A miniature laboratory according to claim 1, characterized in that said top turntable (3) is provided with three preparation cartridges each capable of delivering two calibrated doses of plasma, and that said bottom turntable is provided with six analysis cartridges, with the first three (40) being intended for analyzing the first dose and with the second three (40′) being intended for analyzing the second dose.

3. A miniature laboratory according to any preceding claim, characterized in that each analysis cartridge (40) includes about ten reaction tubes (56).

4. A miniature laboratory according to any preceding claim, characterized in that each analysis cartridge (40) is stored in sealed manner with a diluant in its liquid-receiving compartment (46).

5. A miniature laboratory according to claim 1, characterized in that said preparation cartridge comprises a box (60) closed by a lid (68), both made of transparent plastic material, said box comprising first (61) and second end faces (63) and first (67) and second longitudinally-extending side faces (65), and being compartmented in such a manner as to present:

a blood sample receiving receptacle (70) running along said first longitudinally-extending side face (67) from said first end face (61), followed by an outlet channel (71) in which a plasma storage cell (72) and a red corpuscle storage cell (73) terminate; and

a measurement cell (78) running along said second longitudinally-extending side face (65) going from said first end face (61), said measurement cell being connected by a capillary tube (77) firstly to a central plasma evacuation cell (90) having an outlet orifice (90) in the bottom of said box (60), and secondly to an overflow channel (84) opening out into said plasma storage cell (72) and then into an overflow receptacle (80), the end of the measurement cell opposite to said capillary tube (79) being connected by a capillary duct to overflow cells (82, 83) which also open out into said overflow channel (84).

6. A miniature laboratory according to claim 5, characterized in that said preparation cartridge also has a longitudinal channel (96) running along said second longitudinally-extending face (65) and at the outlets from said overflow cells (83) opposite from the outlet communicating with said measurement cell, said longitudinal channel opening out into a plasma storage receptacle (95) situated close to said second end face (63).

# FIG. 1

EP 0 352 690 B1

FIG. 2

EP 0 352 690 B1

## FIG. 3A

## FIG. 3B

# FIG. 4

# FIG. 5

# FIG. 6

EP 0 352 690 B1

# FIG. 7

# FIG. 8

# FIG. 9

FIG. 10

FIG. 11

FIG. 12

FIG. 13

# F IG.14

# F IG.15

# FIG.16

# FIG.17

# FIG.18

# FIG.19

# FIG.20

# FIG.21

FIG.22

FIG.23

FIG.24          FIG.25

FIG.26

# FIG. 27

# FIG. 28

# FIG.29

# FIG.30